(19) Europäisches Patentamt
European Patent Office
Office européen des brevets

(11) **EP 1 591 300 B1**

(12) **EUROPEAN PATENT SPECIFICATION**

(45) Date of publication and mention
of the grant of the patent:
**24.01.2007 Bulletin 2007/04**

(51) Int Cl.:
**B60L 3/00** *(2006.01)*

(21) Application number: **05103334.8**

(22) Date of filing: **25.04.2005**

(54) **Control device of electric power steering apparatus**

Steuervorrichtung für elektrische Servolenkung

Dispositif de commande pour direction assistée électrique

(84) Designated Contracting States:
**AT BE BG CH CY CZ DE DK EE ES FI FR GB GR
HU IE IS IT LI LT LU MC NL PL PT RO SE SI SK TR**

(30) Priority: **30.04.2004 JP 2004135528**

(43) Date of publication of application:
**02.11.2005 Bulletin 2005/44**

(73) Proprietors:
• **NSK Ltd.**
**Tokyo 141-8560 (JP)**
• **NSK Steering Systems Co. Ltd**
**Shinagawa-ku,**
**Tokyo 141-8560 (JP)**

(72) Inventors:
• **Ta, CaoMinh**
**371-0845, Gunma (JP)**
• **Kobayashi, Hideyuki**
**371-0845, Gunma (JP)**

(74) Representative: **Hooiveld, Arjen Jan Winfried**
**Arnold & Siedsma**
**Sweelinckplein 1**
**2517 GK Den Haag (NL)**

(56) References cited:
**EP-A- 0 660 487          EP-A- 0 966 094**

• **PATENT ABSTRACTS OF JAPAN vol. 2000, no.
20, 10 July 2001 (2001-07-10) & JP 2001 078480 A
(TOYOTA MOTOR CORP), 23 March 2001
(2001-03-23)**

**Description**

BACKGROUND OF THE INVENTION

1. Technical Field

The present invention relates to a control device of an electric power steering apparatus, particularly relates to a control device of an electric power steering apparatus for ensuring failure detection by a current detection sensor in relation to a motor driving circuit.

2. Prior Art

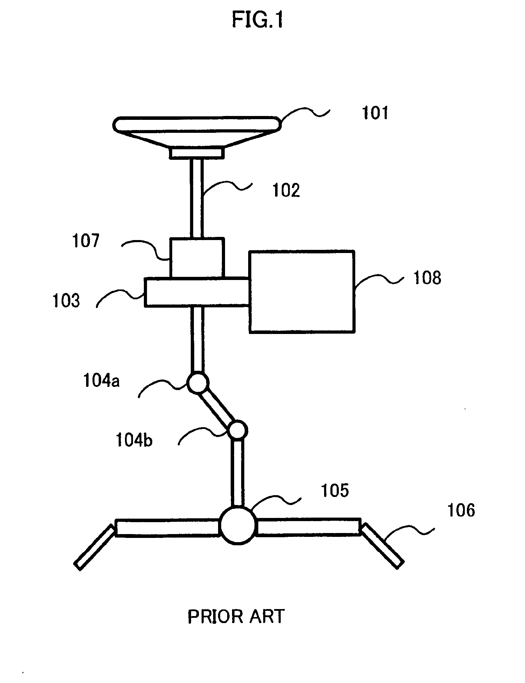

The electric power steering apparatus, which biases a steering apparatus of a motor car with auxiliary load (assist force)by rotation force of a motor, biases a steering shaft or a rack shaft with the auxiliary load by transferring driving force of the motor through a transfer mechanism such as gear or belt via reduction gears. A simple configuration of such an electric power steering apparatus is described with reference to FIG.1. A shaft 102 of a steering handle 101 is connected to a tie-rod 106 of a steering control wheel via reduction gears 103, universal joints 104a and 104b, and a pinion/rack mechanism 105. A torque sensor 107 for detecting steering torque of the steering handle 101 is provided on the shaft 102, and a motor 108 for assisting steering force of the steering handle 101 is connected to the shaft 102 via the reduction gears 103.

Control of the motor 108 needs to be correctly performed such that the motor 108 of the electric power steering apparatus having such a configuration outputs desired torque corresponding to handle operation of a driver. To correctly control the motor 108, various sensors need to be used to detect various conditions of the electric power steering apparatus. Since detection signals obtained from the sensors are extremely important for controlling or protecting the electric power steering apparatus, it is necessary that a failure of the sensors is promptly detected for performing control or protection corresponding to the failure. However, the failure detection of the sensors is extremely difficult, and various detection methods have been considered. For example, a detection method of Japanese patent No. 3292179 B2 is described below with reference to FIG.2.

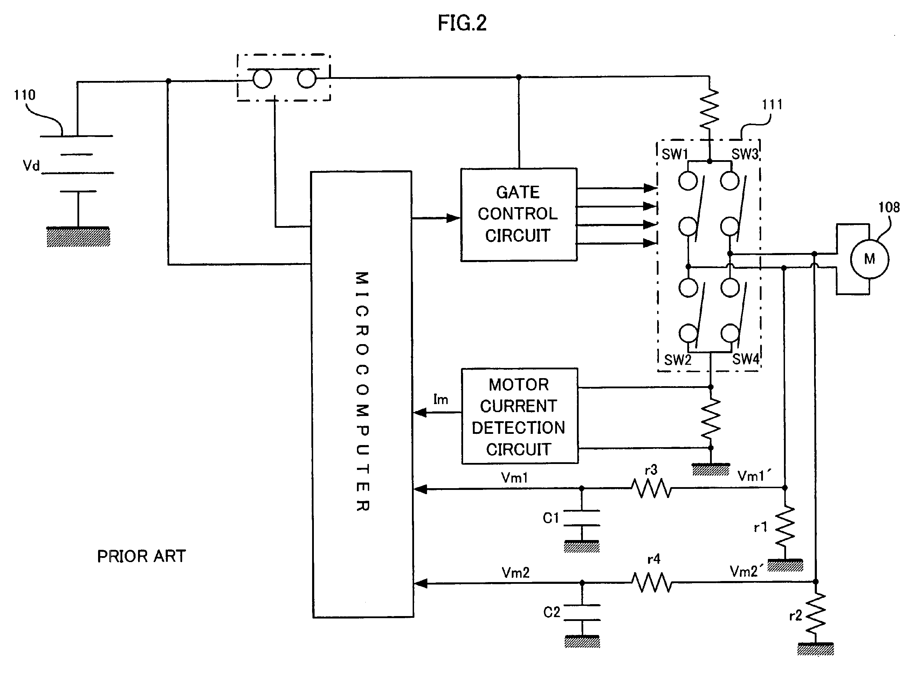

In FIG.2, when a current is applied to the motor 108, abnormality is detected using a fact that a total value of terminal voltage Vm1 and terminal voltage Vm2 of the motor 108 is equal to voltage Vd of a battery 110, or Vd = Vm1 + Vm2. When the current is not applied to the motor 108, the abnormality is detected using whether the total value of the terminal voltage Vm1 and the terminal voltage Vm2 of the motor 108 is substantially zero or not.

When the detection method of FIG.2 is used, detection of source fault or ground fault of wiring of the motor and failure detection of a terminal-voltage detection circuit of the motor are enabled.

When the conventional failure detection method is used, among the failures of the electric power steering apparatus, the detection of the source fault or the ground fault of the wiring of the motor and the failure detection of the terminal-voltage detection circuit of the motor are enabled. However, a failure of a current detection circuit of the motor may be considered as another failure of the electric power steering apparatus, and the failure detection of the current detection circuit has been impossible in the conventional failure detection method.

SUMMARY OF THE INVENTION

The present invention, which was made in the light of the above circumstances, intends to provide a control device of the electric power steering apparatus, in which a failure of a current detection circuit for a DC current of a motor driving circuit comprising a DC power supply and a three-phase inverter and a failure of an electric detection circuit for measuring an output current from the three-phase inverter can be detected.

The present invention relates to the control device of the electric power steering apparatus in which auxiliary force for steering is added to a steering system of a vehicle by a three-phase motor driven by the three-phase inverter using the DC power supply as a driving power supply, and the object of the present invention is achieved by having a DC current detection circuit for measuring a DC current supplied from the DC power supply into the three-phase inverter, at least two current detection circuits for measuring respective phase currents of the three-phase motor, and a determination means for determining whether an absolute value of difference between the maximum value in levels of respective phase currents and a level of the DC current is more than a determination value or not.

The object of the present invention is further effectively achieved by stopping the determination by the determination means when the Dc current detection circuit cannot measure a current in a direction of charging the DC power supply. The object of the invention is further effectively achieved by providing time delay means after the determination means.

BRIEF DESCRIPTION OF THE DRAWINGS

In the accompanying drawings:

FIG.1 is a general block diagram of an electric power steering apparatus;
FIG.2 is a diagram for illustrating a conventional failure-detection technique;
FIG.3 is a diagram showing a general configuration of the invention;
FIG.4 is a diagram showing a relation between each phase current of a three-phase motor and a DC current in relation to a switching state of a three-phase inverter;
FIG.5 is a diagram showing a generation mode of the three-phase motor;
FIG.6 is a diagram showing a configuration of a first embodiment of the present invention; and
FIG.7 is a diagram showing a configuration of a second embodiment of the present invention.

DESCRIPTION OF THE PREFERRED EMBODIMENTS

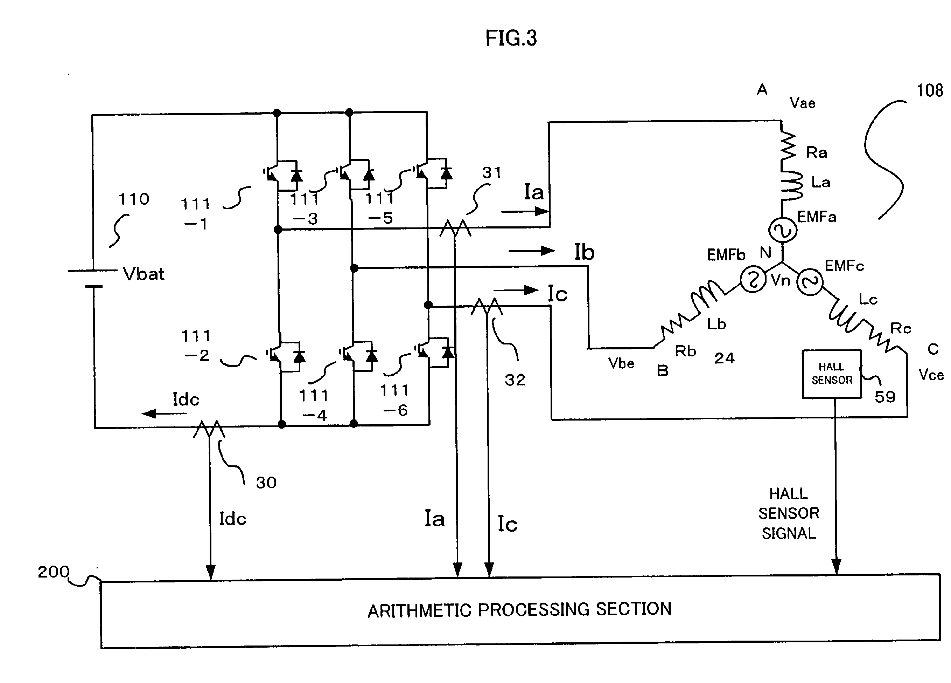

First, an essential idea of the present invention is shown, and then embodiments are explained.
The present invention detects a failure of a detection circuit in relation to the motor driving circuit or a voltage detection circuit, and a failure of a current detection circuit using a principle that a level of a DC current supplied from a battery power supply is equal to a level of a current applied to the motor.
Next, an essential detection principle of the present invention is explained with reference to FIG.3. FIG.3 is a whole block diagram of the present invention including a three-phase brushless DC (BLDC) motor driving circuit. Here, the motor driving circuit comprises a three-phase inverter comprising FETs 111-1, 111-2, 111-3, 111-4, 111-5 and 111-6, and a battery 110 as a DC power supply that is a driving power supply. "Ia", "Ib" and "Ic" indicate respective currents of an a-phase, a b-phase and a c-phase of the motor. "Idc" indicates a DC current supplied from the battery 110. "Vbat" indicates DC voltage of the battery 110. "Vae", "Vbe", "Vce" and "Vn" indicate voltages between the a-phase, b-phase, c-phase and a neutral point of the motor 108, and ground respectively. "R" indicates a winding resistance value of the motor 108, and "L" indicates an inductance value of the motor 108.
The three-phase inverter supplies a current from the battery 110 to the motor 108 through regularly switching operation of respective FET switches. In a condition that the electric power steering apparatus is normally operated, the DC current Idc supplied from the battery 110 returns to the battery 110 via winding of the motor 108 and via any one of current paths for currents Ia, Ib and Ic which are an a-phase current, a b-phase current and a c-phase current of the three-phase motor. Thus, when the DC current Idc and each phase current Ia, Ib or Ic of the motor 108 are measured, and then a relation between them are compared to each other, and when a proper relation is not established, in addition to the failure such as ground fault or source fault, a failure of a DC current detection circuit 30 for detecting the DC current Idc, or a failure of current detection circuits 31 and 32 for detecting the motor currents Ia, Ib and Ic can be detected.
The relation between the DC current Idc and each phase current Ia, Ib or Ic of the motor 108 is described using numerical formulas. First, each phase current Ia, Ib or Ic of the motor can be expressed as the following numerical formula 1.

(Numerical formula 1)

$$Ia = (2/3 \cdot Vbat - Eka)/(Ra + s \cdot La)$$

$$Ib = (-1/3 \cdot Vbat - Ekb)/(Rb + s \cdot Lb)$$

$$Ic = (-1/3 \cdot Vbat - Ekc)/(Rc + s \cdot Lc)$$

Here, $Eka = EMFa - (EMFa + EMFb + EMFc)/3$,

$Ekb = EMFb - (EMFa + EMFb + EMFc)/3$ and

$Ekc = EMFc - (EMFa + EMFb + EMFc)/3$.

Here, "Vbat" expresses battery voltage, and "Eka" , "Ekb" and "Ekc" express equivalent back-EMF (hereinafter refer to "back-EMF") of the a-phase, b-phase and c-phase, respectively. "EMFa", "EMFb" and "EMFc" express back-EMF of the a-phase, b-phase and c-phase, respectively.

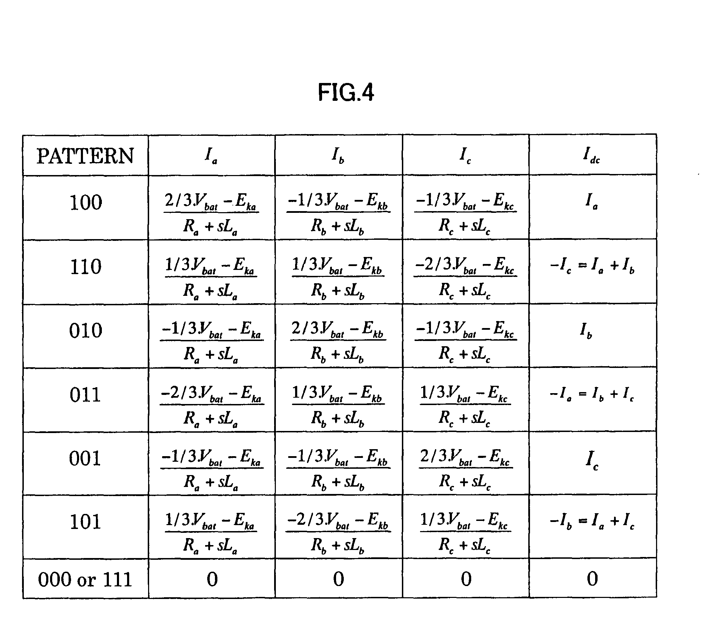

When definition is made in this way, a relation between respective currents Idc and Ia, Ib or Ic is described as FIG.4 depending on ON/OFF states of respective FET switches in the inverter. As clearly understood from FIG.4, the DC current Idc returns to the battery 110 via any route for the motor current Ia, Ib or Ic. Which motor current Ia, Ib or Ic is corresponded with the DC current Idc is different depending on the switching state of the inverter. Thus, for each of switching patterns, the relation between the DC current Idc and the motor current Ia, Ib or Ic is considered below.

For example, current application patterns of an A-phase, a B-phase and a C-phase of an upper arm of the inverter are indicated as pattern "ABC", and it is assumed that "1" implies ON of the FET switch and "0" implies OFF. Accordingly, a pattern "100" indicates that the A-phase switch of the upper arm of the inverter or the FET 111-1 is ON, and the B-phase switch and the C-phase switch or the FETs 111-2 and 111-3 are OFF. Accordingly, in the case of the pattern "100", since the DC current Idc flows through the A-phase switch for supplying the current into the motor 108, a relation of Idc=Ia is established.

Next, in the case of a pattern "110", the DC current Idc is branched into the motor currents Ia and Ib for current application, and along a return current route, the current returns to the battery 110 as the motor current Ic via the C-phase switch of a lower arm of the inverter or via the FET 111-5. Thus, "Idc=-Ic" is established. Here, a negative sign of "-Ic" indicates that the current returns from the motor 108 side to the battery 110 side. Thus, in the current detection circuits 31 and 32, when the current is directed from the battery 110 to the motor 108, a positive sign is used for the indication, and when the current is directed from the motor 108 side to the battery 110, the negative sign is used for the indication.

Next, in the case of a pattern "010", since the DC current Idc flows through the B-phase switch for supplying the current into the motor 108, a relation of Idc=Ib is established.

In the same way, in patterns "011", "001" and "101", the DC current Idc is equal to any one of motor currents Ia, Ib and Ic. FIG.4 shows that a level |Idc| of the DC current Idc is equal to any one of levels |Ia|, |Ib| and |Ic| of respective phase currents Ia, Ib and Ic of the motor 108.

The relation is expressed in a numerical formula as numerical formula 2.

(Numerical formula 2)

$$|Idc|=\max(|Ia|,\ |Ib|,\ |Ic|)$$

Here, |Ia|, |Ib| and |Ic| indicate the levels of respective phase currents Ia, Ib and Ic of the motor 108.

Saying the meaning of the above numerical formula 2 differently, when any one of the DC current detection circuit 30, the current detection circuit 31, and the current detection circuit 32 has a failure, the numerical formula 2 is not established.

The numerical formula 2 expresses a theoretical relation, and an actual circuit has a detection error and a calculation error, therefore a determination value errI indicating an allowable error for determining as normal or abnormal is necessary. Accordingly, the failure of the DC current detection circuit 30, the current detection circuit 31 and the current detection circuit 32 is determined according to the following numerical formula 3.

(Numerical formula 3)

$$\Delta I = ||Idc| - \max(|Ia|,\ |Ib|,\ |Ic|)| > errI$$

Thus, when a deviation $\Delta I$ that is an absolute value of difference between the level |Idc| of the DC current Idc and max (|Ia|, |Ib|, |Ic|) that is the maximum value in the levels of currents of respective phases is smaller than the determination value errI, the DC current detection circuit 30, the current detection circuit 31 and the current detection circuit 32 are determined to be normally operated.

Next, in the case of a special condition that the DC current detection circuit 30 can perform the measurement only when the current is supplied from the battery 110 side to the motor 108 side, a theory on the failure detection of the DC current detection circuit 30, the current detection circuit 31 and the current detection circuit 32 is described. Thus, the special condition is a condition that the DC current detection circuit 30 cannot measure the current when the motor 108 is in a generation mode in order to charge the battery 110. In that case, wrong determination is given from the determination formula of the above numerical formula 3, therefore the numerical formula 3 as a determination formula is not used in the generation mode, in other words, determination by the numerical formula 3 needs to be masked.

Here, how to detect the generation mode is a problem. At least output power PW from the motor 108 needs to be positive, which can be used to detect the generation mode. Here, the output power PW can be expressed in a numerical formula as the following numerical formula 4.

$$\text{(Numerical formula 4)}$$

$$PW=Tr \cdot \omega = Kt \cdot Iref \cdot \omega$$

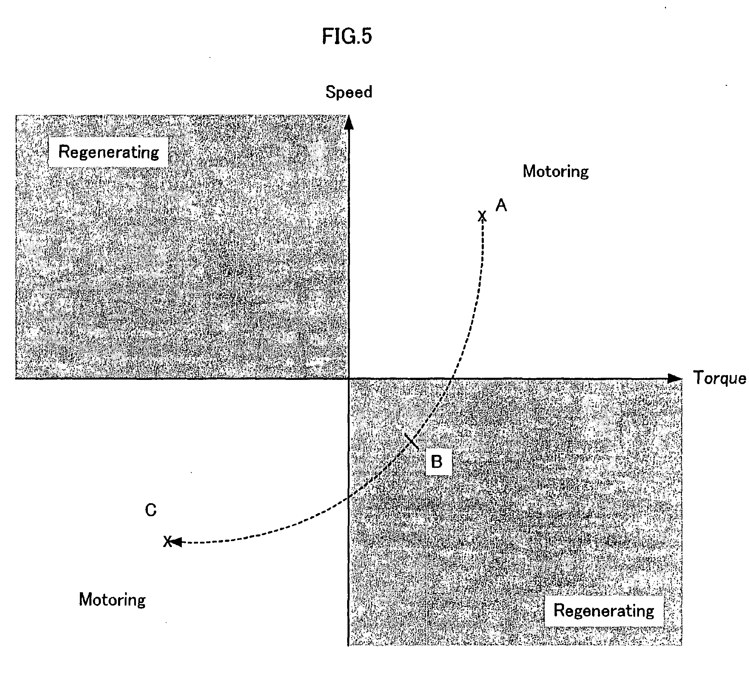

Thus, the output power PW can be obtained from a relation between torque Tr and angular velocity $\omega$. The relation is shown in a drawing as FIG.5. Here, since the torque Tr of the motor 108 is "$Tr = Kt \cdot Iref$" wherein "Kt" is a torque constant, polarity of the torque Tr can be determined by determining polarity of a current command value Iref. Since "$\omega$" is the angular velocity of the motor 108, polarity of the angular velocity $\omega$ calculated from a Hall sensor signal obtained by a Hall sensor can be determined. Accordingly, to calculate the polarity of the output power PW, the polarity of the current instruction value Iref and the polarity of the angular velocity $\omega$ calculated based on the angular velocity $\omega$ obtained from the Hall sensor signal can be obtained.

Regarding the generation mode, when the handle is inversely operated at high speed, large back-EMF is generated and the voltage at the motor 108 side is higher than the battery voltage Vbat, and a condition that the motor current flows from the motor 108 side to the battery 110 side as a charging current occurs. Thus, as a condition for determining the generation mode, both condition of output power PW of the above numerical formula 4 and condition of a numerical formula 5 that is a condition as shown below need to be satisfied.

$$\text{(Numerical formula 5)}$$

$$(4/3) \cdot (Ke/2) \cdot \omega + Imax \cdot R \cdot \sqrt{(1+(\omega \cdot P)^2 \cdot \tau^2)} > (2/3) \cdot Vbat$$

$$\text{Here, the time constant equation is } \tau = L/R \text{ and } P \text{ is a}$$

$$\text{pole-pair number of the motor 108.}$$

A process of deducing the formula of the numerical formula 5 is described below.

In FIG. 3, a route of returning to an anode of the battery 110 starting from a cathode of the battery 110 via an A-point, an N-point and a B-point is expressed by a relation between voltage and current as the below numerical formula 6.

$$\text{(Numerical formula 6)}$$

$$Vbat=Ra \cdot Ia+La \cdot (dIa/dt)+EMFa-Rb \cdot Ib-Lb \cdot (dIb/dt)-EMFb$$

In the same way, a route of returning to the anode of the battery 110 starting from the cathode of the battery 110 via the A point, the N point and a C point is expressed by a relation between voltage and current as the below numerical formula 7.

(Numerical formula 7)

$$Vbat=Ra \cdot Ia+La \cdot (dIa/dt)+EMFa-Rc \cdot Ic-Lc \cdot (dIc/dt)-EMFc$$

Here, when a relation of "Ia+Ib+Ic=0" is used in the numerical formula 7 for modification, the formula is transformed as the below numerical formula 8.

(Numerical formula 8)

$$Vbat=Ra \cdot Ia+La \cdot (dIa/dt)+EMFa+Rc \cdot (Ia+Ib)+Lc \cdot$$

$$(d(Ia+Ib)/dt)-EMFc$$

Here, since Ra=Rb=Rc and La=Lb=Lc are further generally established, when these relations are used, the numerical formula 8 can be expressed as numerical formula 9.

(Numerical formula 9)

$$Vbat=2Ra \cdot Ia+2La \cdot (dIa/dt)+EMFa+Ib \cdot Rc+Lc \cdot (dIb/dt)-EMFc$$

Furthermore, when both sides of the numerical formula 6 and the numerical formula 9 are added, the results can be expressed as the below numerical formula 10.

(Numerical formula 10)

$$2Vbat=3Ra \cdot Ia+3La \cdot (dIa/dt)+2EMFa-EMFb-EMFc$$

When both sides of the numerical formula 10 are divided by "3", the result is the below numerical formula 11.

(Numerical formula 11)

$$2/3 \cdot Vbat=Ra \cdot Ia+La \cdot (dIa/dt)+ EMFa-(EMFa+EMFb+EMFc)/3$$

Here, a definition is made as follows.

(Numerical formula 12)

$$Eka=EMFa-(EMFa+EMFb+EMFc)/3$$

Accordingly, the numerical formula 11 becomes numerical formula 13.

**(Numerical formula 13)**

$$2/3 \cdot Vbat = Ra \cdot Ia + La \cdot (dIa/dt) + Eka$$

Furthermore, R=Ra=Rb=Rc and L=La=Lb=Lc are assumed, in addition, assuming to be a steady state, $L(dI/dt)=j\omega_e L$ is assumed, and then the numerical formula 14 is rewritten into a numerical formula 15. Here, an electrical angle is $\omega_e = \omega \cdot P$, and P is the pole-pair number of the motor 108.

**(Numerical formula 14)**

$$2/3 \cdot Vbat = [Ra + s \cdot La]Imax + Eka$$

Furthermore, when Ekmax=4/3(Ke/2) · ω is substituted, the numerical formula 14 becomes numerical formula 15.

**(Numerical formula 15)**

$$2/3 \cdot Vbat = (R + j\omega_e \cdot L)Imax + 4/3 \cdot Ke/2 \cdot \omega$$

Accordingly, the numerical formula 15 is a boundary condition of the determination formula, and the numerical formula 5 is established.

Hereinafter, preferred embodiments based on the theory will be described.

Embodiment-1

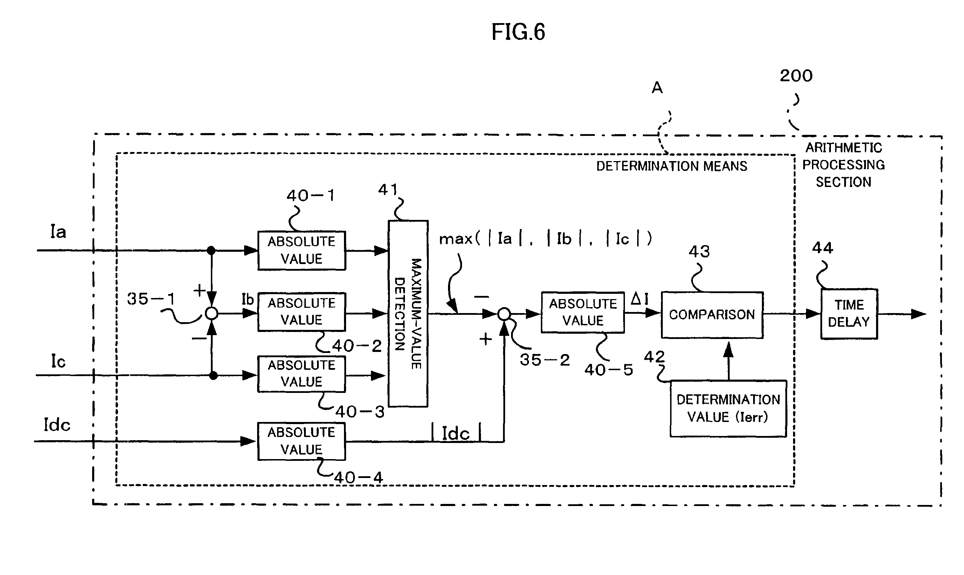

A first embodiment of the present invention is described with reference to FIG.3 and FIG.6.

In FIG.3, the DC current detection circuit 30 for measuring the DC current Idc is disposed in a DC circuit that connects a DC power supply 100 to the three-phase inverter. Moreover, the current detection circuit 31 and the current detection circuit 32 are disposed for measuring the a-phase current Ia and the c-phase current Ic of the three-phase inverter or three-phase motor. The detected currents Idc, Ia and Ic are inputted into an arithmetic processing section 200. The arithmetic processing section 200 sometimes comprises a microcomputer or a CPU and is processed with software, or sometimes comprises hardware.

In FIG.6, a portion enclosed by a dashed line A is corresponding to the determination means. According to a formula of Ib=Ia-Ic, the current Ib is calculated by a subtraction section 30-4 from the currents Ia and Ic inputted into the determination means A in the arithmetic processing section 200. Next, the currents Ia, Ib and Ib are inputted into absolute-value sections 40-1, 40-2 and 40-3 respectively, and |Ia|, |Ib| and |Ic|, which are levels of the a-phase current, b-phase current and c-phase current respectively, are outputted as output from the absolute-value sections 40-1, 40-2 and 40-3. Furthermore, the |Ia|, |Ib| and |Ic|, which are the levels of the a-phase current, b-phase current and c-phase current respectively, are inputted into a maximum-value detection section 41, and the max(|Ia|, |Ib|, |Ic|), which is the maximum value in the values, is outputted. The DC current Idc detected by the DC current detection circuit 30 is inputted into an absolute-value section 40-4 and the absolute value of the current |Idc| is outputted. The DC current detection circuit 30 can detect DC currents in both directions.

Next, in a subtraction section 35-2, the max(|Ia|, |Ib|, |Ic|), which is the maximum current in respective phase currents, and the absolute value |Idc| of the DC current Idc are inputted, and |Idc| - max(|Ia|, |Ib|, |Ic|), which is deviation of them, is outputted. The output is inputted into an absolute-value section 40-5, and the deviation ΔI=| |Idc|- max(|Ia|, |Ib|, |Ic|)| indicated by the numerical formula 3 is outputted.

Next, whether the deviation ΔI, which is the absolute value of difference between the maximum current value in the levels of respective motor currents Ia, Ib and Ic, and the level of the DC current Idc, is equal to or less than the determination value (errI) is determined. The deviation ΔI that is outputted from the absolute-value section 40-5 and the determination value (errI) indicated by a determination-value setting section 42 are inputted into a comparison section 43, and then levels of them are compared. When the deviation ΔI is larger than the determination value (errI), the comparison section 43 determines that at least one of the DC current detection circuit 30 and the current detection circuits 31, 32 is an abnormal state, and when the deviation ΔI is smaller than the determination value (errI), it determines that all of the DC current detection circuit 30 and the current detection circuits 31, 32 are normal state. This is because if the electric power steering apparatus, including the current detection circuits, is normally operated, deviation of the determination value or more should not occur. Contrarily, when the deviation ΔI is larger than the determination value, it implies the failure such as source fault or ground fault occurring in the driving circuit in the electric power steering apparatus, or the failure occurring in each of the current detection circuits.

In some cases, a time delay means 44 is disposed after the comparison section 43. The time delay means 44 is for preventing malfunction of determination means A due to noise or the like, and preferably provided though it is not indispensable requirement. Thus, even if the comparison section 43 determines as abnormality for extremely short period, when it does not continue for a time period set by the time delay means 44 or more, it is decided as malfunction due to noise and not regarded as the failure of the current detection circuit.

Accordingly, when the first embodiment is used, the failure of the current detection circuit in the motor driving circuit of the electric power steering apparatus can be detected.

Embodiment-2

When the DC current Idc in the generation mode cannot be measured by the DC current detection circuit 30, the above described failure detection of the DC current detection circuit 30, the current detection circuit 31 and the current detection circuit 32 by comparing the DC current Idc to the motor current Ia, Ib or Ic cannot be determined. Accordingly, the determination needs to be stopped during such a period.

When the current flows in the charging direction from the motor 108 to the battery 110, since the DC current detection circuit 30 cannot measure the DC current for the functional reasons, the determination needs to be stopped to prevent malfunctions of the determination for a charging period. Judgment in the charging period is made when both of the numerical formula 4 and the numerical formula 5 are satisfied. Regarding the numerical formula 4 that is a first condition, the polarity of the output power PW is determined and judged. The output power PW can be determined from the polarity of the current command value Iref and the polarity of the motor angular velocity ω calculated from the Hall sensor signal as shown in the numerical formula 4.

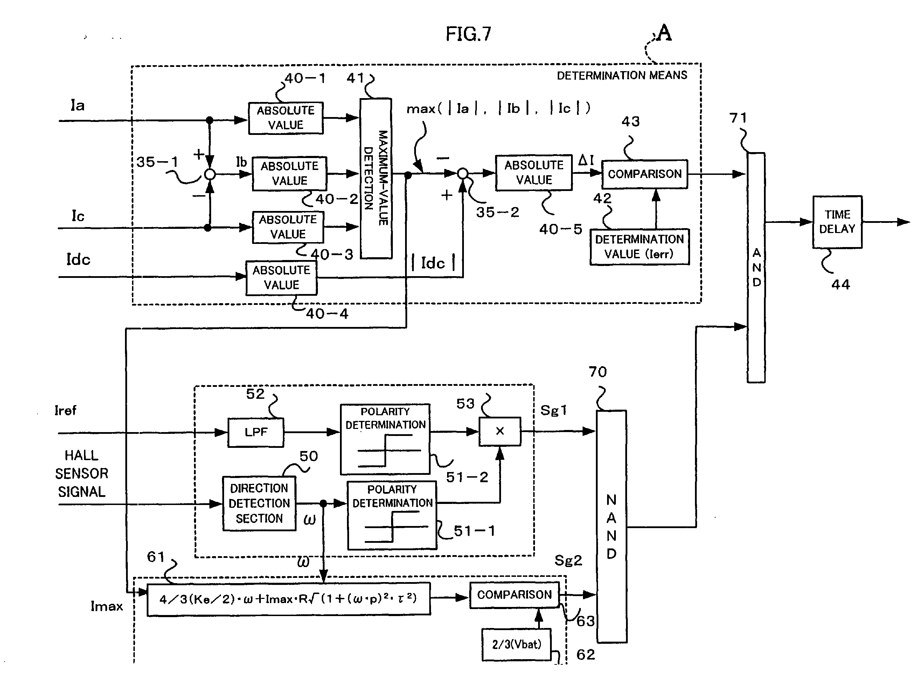

The configuration of the second embodiment is shown in FIG.7.

First, with reference to FIG.1, a Hall sensor signal from a Hall sensor 59 provided in the motor 108 is inputted into the arithmetic processing section 200. In the arithmetic processing section 200, the Hall sensor signal is inputted into a direction detection section 50, and then the angular velocity w is calculated and outputted. Next, the angular velocity ω is inputted into a polarity determination section 51-1, and the polarity of the angular velocity w is outputted as positive (+1) or negative (-1).

On the other hand, as shown in FIG. 7, the current command value Iref calculated from the steering torque or car speed is inputted into a lowpass filter 52. Polarity of the current command value Iref that has passed through the low pass filter (LPF) 52 is determined in a polarity determination section 51-2, and outputted as positive (+1) or negative (-1).

Since the output power PW is the product of the current command value Iref and the angular velocity ω as shown in the numerical formula 4, the polarity of the current command value Iref and the polarity of the angular velocity ω are inputted into a multiplication section 53, and the multiplication section 53 outputs positive (+1) when the product of the polarity of the current command value Iref and the polarity of the angular velocity ω is positive (+1), and outputs zero (0) when the product is negative (-1).

The numerical formula 5 that is a second condition is determined. The left side of the numerical formula 5, "4/3 · Ke/2 · ω+Imax · R · $\sqrt{1+\omega_e^2 \cdot \tau^2}$ " is calculated in an induced-voltage calculation section 61 to which the maximum current Imax=(max(Ia, Ib, Ic) and the angular velocity ω are inputted. The constant Ke, the winding resistance value R and the inductance value L are values determined depending on motor performance. The left side of the numerical formula 5 and a setting section 62 indicating "2/3" of the battery voltage Vbat are compared in a comparison section 63. Although the battery voltage Vbat is typically 12 [V], if accuracy is required, the battery voltage is measured and the measured value may be used.

When the numerical formula 5 is established (that is, the left side of the numerical formula 5 is larger than the right side) in the comparison section 63, the comparison section 63 outputs positive (+1). In other cases, it outputs zero (0). NAND between "Sg1" that is an output of the multiplication section 53 and "Sg2" that is an output of the comparison section 63 is obtained in a NAND section 70. Thus, when both of signals Sg1 and Sg2 are positive (+1), or when both formulas of the numerical formula 4 and the numerical formula 5 are established, or output from the NAND section 70 is zero (0), it implies that the motor is in the generation mode, and the DC current Id charges the battery.

In the case of the generation mode, the result in the determination means A, or the output from the comparison section 43 needs to be masked. Thus, an AND section 71, to which the output from the comparison section 43 that is the determination result in the determination means A and output from the NAND section 70 are inputted, is provided. When the output from the NAND section 70 is zero, even if the output from the comparison section 43 is positive (+1) or zero (0), output from the AND section 71 is zero and the failure of the current detection circuits 30, 31 and 32 can not be determined. Contrarily, when the output from the NAND section 70 is positive (+1), the output from the determination means A or the comparison section 43 becomes the output from the AND section 71, and the failure detection of the current detection circuits 30, 31 and 32 is performed. A time delay means 44 disposed at an output of the AND section 71 is to prevent malfunction due to noise or the like.

As described hereinbefore, when the motor 108 generates electricity and the DC current detection circuit 30 cannot detect the current in the direction of charging the battery 110, the wrong determination can be prevented by masking the determination result. Contrarily, when current is supplied from the battery 110 into the motor 108, the advantage that the failure of the DC current detection circuit 30, the current detection circuit 31 and the current detection circuit 32 can be surely detected can be expected.

Although the B-phase current was obtained by calculating from difference between the A-phase current and the C-phase current in the first and second embodiments, even when a B-phase current detection circuit is provided and the first and the second embodiments are practiced using the B-phase current Ib measured by the B-phase current detection circuit, the failure detection of the DC current detection circuit or the current detection circuits of respective phases can be similarly performed.

When the invention is used, in the three-phase motor, a DC current supplied from the DC power supply is always fed from any one phase of winding of the three-phase motor and then returns to the DC power supply via the remaining two phases, or is supplied from any two phases of the winding of the three-phase motor and then returns to the DC power supply via the remaining one phase, therefore a level of DC current measured by the DC current detection circuit is compared to a level of the maximum current in respective phase currents of the three-phase motor measured by the current detection circuit, and then whether the levels are equal to each other or not is determined, thereby an advantage that failure determination of the current detection circuit is enabled can be expected.

**Claims**

1. A control device of an electric power steering apparatus in which auxiliary force for steering is added to a steering system of a vehicle by a three-phase motor (108) driven by a three-phase inverter using a DC power supply (110) as a driving power supply, comprising of:

   a DC current detection circuit (30) for measuring a DC current (Idc) supplied from the DC power supply (110) into the three-phase inverter, at least two current detection circuits (31, 32) for measuring respective phase currents (Ia, Ib, Ic) of the three-phase motor (108), and a determination means (A) for determining whether an absolute value of difference between the maximum value in levels of the currents (Ia,Ib,Ic) of respective phases and a level of the DC current (Idc) is more than a determination value (errl) or not.

2. A control device of an electric power steering apparatus according to claim 1, wherein when the DC current detection circuit (30) cannot measure a current in a direction of charging the DC power supply (110), determination by the determination means (A) is stopped.

3. A control device of an electric power steering apparatus according to claim 1 or 2, wherein a time delay means (44) is provided after the determination means (A).

4. A control device of an electric power steering apparatus according to claim 1, wherein the determination means (A) determines a normal state when the absolute value is smaller than the determination value (errl), and does an abnormal state when the absolute value is or more than the determination value (errl).

5. A control device of an electric power steering apparatus according to claim 1, wherein the determination means (A) finally determines the abnormal state when a preset time passes after the determination of the abnormal state.

**Patentansprüche**

1. Steuervorrichtung für eine elektrische Servolenkung, bei der eine Hilfskraft zum Lenken einem Lenksystem des Fahrzeugs durch einen Drehstrommotor (108) zugeführt wird, der von einem Drehstromwechselrichter unter Verwendung einer Gleichstromversorgung (110) als eine Antriebsenergieversorgung angetrieben wird, umfassend:

   eine Gleichstromdetektionsschaltung (30) zur Messung eines von der Gleichstromversorgung (110) in den Drehstromwechselrichter gelieferten Gleichstroms (Idc), mindestens zwei Stromdetektionsschaltungen (31, 32) zur Messung von jeweiligen Phasenströmen (Ia, Ib, Ic) des Drehstrommotors (108), und ein Ermittlungsmittel (A) zur Ermittlung, ob ein Absolutwert der Differenz zwischen dem maximalen Wert der Pegel der Ströme (Ia, Ib, Ic) von jeweiligen Phasen und einem Pegel des Gleichstroms (Idc) größer als ein Ermittlungswert (errI) ist oder nicht.

2. Steuervorrichtung für eine elektrische Servolenkung nach Anspruch 1, **dadurch gekennzeichnet, daß** die Ermittlung vom Ermittlungsmittel (A) angehalten wird, wenn die Gleichstromdetektionsschaltung (30) keinen Strom in einer Laderichtung der Gleichstromversorgung (110) messen kann.

3. Steuervorrichtung für eine elektrische Servolenkung nach Anspruch 1 oder 2, **dadurch gekennzeichnet, daß** ein Verzögerungsmittel (44) hinter dem Ermittlungsmittel (A) vorgesehen ist.

4. Steuervorrichtung für eine elektrische Servolenkung nach Anspruch 1, **dadurch gekennzeichnet, daß** das Ermittlungsmittel (A) einen normalen Zustand, wenn der Absolutwert kleiner als der Ermittlungswert (errI) ist, und einen abnormalen Zustand ermittelt, wenn der Absolutwert dem Ermittlungswert (errI) gleicht oder größer als dieser ist.

5. Steuervorrichtung für eine elektrische Servolenkung nach Anspruch 1, **dadurch gekennzeichnet, daß** das Ermittlungsmittel (A) den abnormalen Zustand endgültig ermittelt, wenn eine vorab festgelegte Zeitdauer nach der Ermittlung des abnormalen Zustands vergangen ist.


**Revendications**

1. Dispositif de commande d'un appareil de direction assistée électriquement, dans lequel une force auxiliaire de direction est ajoutée à un système de direction d'un véhicule par un moteur triphasé (108) piloté par un convertisseur triphasé utilisant une alimentation (110) en courant continu comme alimentation en énergie d'entraînement, comprenant :

   un circuit (30) de détection de courant continu destiné à mesurer un courant continu (Idc) transmis par l'alimentation (110) en courant continu au convertisseur triphasé, au moins deux circuits (31, 32) de détection de courant destinés à mesurer les courants des phases respectives (Ia, Ib, Ic) du moteur triphasé (108), et un dispositif de détermination (A) destiné à déterminer si une valeur absolue de la différence entre la valeur maximale des intensités des courants (Ia, Ib, Ic) des phases respectives et une intensité du courant continu (Idc) dépasse une valeur de détermination (errI) ou non.

2. Dispositif de commande d'un appareil de direction assistée électriquement selon la revendication 1, dans lequel, lorsque le circuit (30) de détection de courant continu ne peut pas mesurer un courant dans une direction de charge de l'alimentation (110) en courant continu, la détermination par le dispositif de détermination (A) est interrompue.

3. Dispositif de commande d'un appareil de direction assistée électriquement selon la revendication 1 ou 2, dans lequel un dispositif (44) à retard est disposé après le dispositif de détermination (A).

4. Dispositif de commande d'appareil de direction assistée électriquement selon la revendication 1, dans lequel le dispositif de détermination (A) détermine un état normal lorsque la valeur absolue est inférieure à la valeur de détermination (errI) et donne un état anormal lorsque la valeur absolue est supérieure ou égale à la valeur de détermination (errI).

5. Dispositif de commande d'un appareil de direction assistée électriquement selon la revendication 1, dans lequel le dispositif de détermination (A) détermine finalement l'état anormal lorsqu'un temps préréglé s'écoule après la détermination de l'état anormal.

# FIG.1

PRIOR ART

EP 1 591 300 B1

# FIG.2

PRIOR ART

EP 1 591 300 B1

FIG.3

# FIG.4

| PATTERN | $I_a$ | $I_b$ | $I_c$ | $I_{dc}$ |
|---------|-------|-------|-------|----------|
| 100 | $\dfrac{2/3.V_{bat} - E_{ka}}{R_a + sL_a}$ | $\dfrac{-1/3.V_{bat} - E_{kb}}{R_b + sL_b}$ | $\dfrac{-1/3.V_{bat} - E_{kc}}{R_c + sL_c}$ | $I_a$ |
| 110 | $\dfrac{1/3.V_{bat} - E_{ka}}{R_a + sL_a}$ | $\dfrac{1/3.V_{bat} - E_{kb}}{R_b + sL_b}$ | $\dfrac{-2/3.V_{bat} - E_{kc}}{R_c + sL_c}$ | $-I_c = I_a + I_b$ |
| 010 | $\dfrac{-1/3.V_{bat} - E_{ka}}{R_a + sL_a}$ | $\dfrac{2/3.V_{bat} - E_{kb}}{R_b + sL_b}$ | $\dfrac{-1/3.V_{bat} - E_{kc}}{R_c + sL_c}$ | $I_b$ |
| 011 | $\dfrac{-2/3.V_{bat} - E_{ka}}{R_a + sL_a}$ | $\dfrac{1/3.V_{bat} - E_{kb}}{R_b + sL_b}$ | $\dfrac{1/3.V_{bat} - E_{kc}}{R_c + sL_c}$ | $-I_a = I_b + I_c$ |
| 001 | $\dfrac{-1/3.V_{bat} - E_{ka}}{R_a + sL_a}$ | $\dfrac{-1/3.V_{bat} - E_{kb}}{R_b + sL_b}$ | $\dfrac{2/3.V_{bat} - E_{kc}}{R_c + sL_c}$ | $I_c$ |
| 101 | $\dfrac{1/3.V_{bat} - E_{ka}}{R_a + sL_a}$ | $\dfrac{-2/3.V_{bat} - E_{kb}}{R_b + sL_b}$ | $\dfrac{1/3.V_{bat} - E_{kc}}{R_c + sL_c}$ | $-I_b = I_a + I_c$ |
| 000 or 111 | 0 | 0 | 0 | 0 |

EP 1 591 300 B1

EP 1 591 300 B1

# FIG.5

FIG.6

FIG.7